Europäisches Patentamt

European Patent Office

Office européen des brevets

(11) Publication number: **0 215 586**
**A2**

# (12) EUROPEAN PATENT APPLICATION

(21) Application number: **86306436.6**

(22) Date of filing: **20.08.86**

(51) Int. Cl.⁴: **B 60 T 13/52**

(30) Priority: **16.09.85 US 776698**

(43) Date of publication of application:
**25.03.87 Bulletin 87/13**

(84) Designated Contracting States: **DE FR GB**

(71) Applicant: **GENERAL MOTORS CORPORATION**
**General Motors Building 3044 West Grand Boulevard**
**Detroit Michigan 48202 (US)**

(72) Inventor: **Parker, Donald Lee**
**7967 Meyers Road**
**Middletown Ohio 45042 (US)**

**Miller, James William**
**2519 Upper Bellbrook Road**
**Xenia Ohio 45385 (US)**

(74) Representative: **Breakwell, John Neil Bower et al**
**GM Patent Section Vauxhall Motors Limited Luton Office**
**(F6) P.O. Box No. 3 Kimpton Road**
**Luton Bedfordshire LU2 0SY (GB)**

(54) Booster mount.

(57) A booster is mounted on a supporting panel (44) by means of a cam and lock arrangement (48,68). Mounting can be accomplished from one side of the panel, and for assembly the booster input push rod (16) can readily be connected to a pedal arm (18).

Fig. 1

EP 0 215 586 A2

# Description

## BOOSTER MOUNT

This invention relates to a mounting arrangement for mounting a power head such as that of a brake booster to a fixed panel.

The booster may be of a conventional type, which is normally mounted to the vehicle dash panel with the booster in the engine compartment of the vehicle and the booster push rod extending rearwardly into the passenger compartment and attached to a brake pedal arm for actuation by the vehicle operator.

It has been common practice for many years to secure a brake booster housing to the firewall of a vehicle by means of studs extending through holes in the firewall. In some instances a mounting bracket may be secured to the firewall, and the booster is in turn secured to the mounting bracket. Examples of such constructions are replete in the art. For example, US-A-3 013 537 shows a booster 13 with bolts 43 extending through a firewall so as to mount the booster on the firewall. US-A-2 942 892 shows a bracket mounting arrangement using studs.

It has also been proposed to secure a bracket to the booster and have the bracket extend into the passenger compartment of the vehicle, with the mounting bracket being bolted to the firewall. Examples of this are found in US-A-3 698 260 and US-A-3-714-780.

The present invention is concerned with the provision of an improved arrangement for mounting a brake booster to the dash panel or other fixed panel of a vehicle, and achieves this, broadly, by the use of a cam locking arrangement, with the mounting being arranged on one side of the panel for simplified assembly.

The invention comprises the combination of features specified in claim I.

In a preferred embodiment of a mounting arrangement in accordance with the present invention, a housing plate is provided on the power head and is first meshed with, and then turned to cam-lock into, another plate which is secured to the vehicle dash panel. All of the brake booster push rod attachments can be attached or installed from the engine-compartment side of the dash panel. Once the booster power head has been interlocked in camming relation, a fastener or fasteners may be secured to keep the booster power head from rotating in the reverse direction and thereby becoming unlocked. All the motions involved in the installation of the power head are circular about the axis of the power head and push rod, the camming action producing a slight axial movement as the power head is cam-locked in place. The booster push rod may have a ball and socket snap-action arrangement allowing the push rod to be connected to the brake pedal arm, after the booster assembly has been attached to the dash panel, by merely pressing the brake pedal arm downwardly over the ball end of the push rod.

In the drawing:

Figure I is an elevational view, with parts broken away and in section, illustrating a brake booster power head secured to a dash panel or firewall panel of a vehicle by means of a mounting arrangement in accordance with the present invention;

Figure 2 is a fragmentary sectional view, with parts in elevation, showing a modified attachment arrangement between a push rod and a brake pedal arm shown in Fig I, for permitting snap-action attachment thereof;

Figure 3 is a fragmentary view in the direction of arrows 3--3 of Figure I, showing a cam lock arrangement in a locked position, with a bracket arm which prevents the power head from becoming unlocked; and

Figure 4 is a fragmentary sectional view in the direction of arrows 4--4 of Figure 3, with parts broken away and in elevation, further illustrating the cam lock arrangement in conformity with the invention.

With reference now to the drawing, a power head 10 is illustrated as being a brake booster assembly including a booster housing 12 and a master cylinder assembly 14 actuated by the booster, as is well known in the art. The booster assembly 10 includes a push rod 16 extending rearwardly and connected to a brake pedal arm 18 of the vehicle for actuation. A connection 20 to the brake pedal arm is illustrated in Figure I as including a pin 22 that extends a short distance laterally from the arm and is received through an eye 24 formed on the outer end of the push rod 16. A clip 26 is fitted over the pin 22 and grips the pin 22 so as to hold the push rod eye 24 to the brake pedal arm 18.

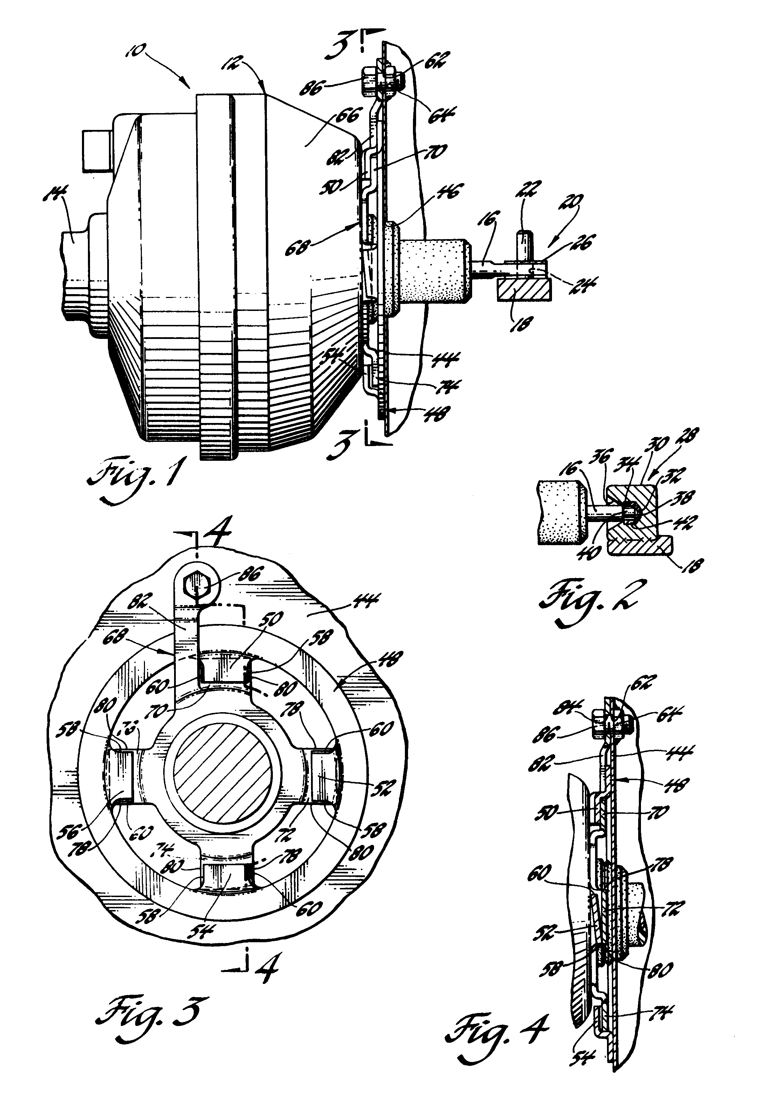

Figure 2 shows a modified connection 28 between the push rod 16 and the brake pedal arm 18. In this connection, a socket member 30 is secured to the side of the brake pedal arm 18 and is formed with a socket 32 opening towards the push rod 16. The socket 32 has a groove 34 formed therein and then flares outwardly as shown at 36 to provide a guide surface for the rear end of the push rod 16. The push rod 16 has its rear end formed with a ball-like head 38. A groove 40 adjacent the head 38 receives a snap ring 42 therein. The groove 40 and the snap ring 42 are so arranged that the push rod head 38 may be forced into the socket 32, thereby causing the snap ring 42 to deflect radially inwardly so that it passes axially into the groove 34 and then expands within that groove to hold the push rod head in place in the socket member 32. This assembly may be accomplished by merely depressing the brake pedal arm 18 after the booster assembly 10 has been secured in place as described below.

The vehicle in which the assembly 10 is installed has a fixed panel 44 which is sometimes identified as a firewall or dash panel. The portion of the panel which is directly related to the mounting arrangement for the booster is preferably a planar panel section as illustrated in Figure I. This panel section has an opening 46 formed therein through which the rearward portion of the booster assembly 10, particularly including the push rod 16, axially extends.

An annular cam plate 48 is secured to the side of the panel 44 facing the engine compartment of the vehicle, and is secured about the panel opening 46. The cam plate 48 has a series of circumferentially spaced cam tabs 50, 52, 54 and 56 extending radially inwardly therefrom and in axially spaced relation to the planar panel section of the fixed panel 44. Four such cam tabs are shown, although alternatively three or more cam tabs would function quite well.

Each of the cam tabs 50, 52, 54 and 56 has an arcuately oriented leading edge 58 and an arcuately oriented trailing edge 60. The leading edge 58 of each cam tab is spaced axially further away from the planar panel section of the panel 44 than is the trailing edge 60 of each of the cam tabs, and therefore each of the cam tabs is positioned in a plane which is at an angle to the plane of the planar panel section of the panel 44. The panel 44 is also provided with another opening 62 which is spaced radially outwardly of the annular cam plate 48, and a suitable internally threaded member such as a nut 64 is provided as part of the opening 62 and is adapted to receive a threaded mounting screw therethrough, as will be further described.

The power head housing 12 includes a housing section 66 which extends axially and radially, with the push rod 16 extending outwardly therefrom. An annular cam bracket 68 is secured to the power head housing section 66 about the push rod 16. The cam bracket 68 has circumferentially spaced bracket tabs 70, 72, 74 and 76 which extend radially outwardly and are in axially spaced relation to the power head housing section 66. Each of the bracket tabs 70, 72, 74 and 76 has an arcuately oriented leading edge 78 and an arcuately oriented trailing edge 80. Three or more bracket tabs may be formed from the annular cam bracket 68, as long as they are circumferentially spaced in co-operative relation with the cam tabs of the annular cam plate 48.

The bracket tabs 70, 72, 74 and 76 are circumferentially spaced in cam-engageable relation with the cam tabs 50, 52, 54 and 56. When so engaged, the bracket tabs co-operate with the cam tabs to secure the power head 10 to the panel 44. The leading edges 58 of the cam tabs 50, 52, 54 and 56 engage the bracket tabs 70, 72, 74 and 76 as the power head is placed in position and turned about the axis of the power head and push rod. This engagement is in cammed relation so that the power head is mounted firmly to the panel 44. The power head may be arcuately turned in the opposite direction to disengage the bracket tabs from the cam tabs, for removal of the power head from the panel 44. In some instances it is desirable to have the bracket tabs 70, 72, 74 and 76 so arranged that their leading edges 78 are spaced axially from the panel 44 by a distance which is different from the distance of the trailing edges of those tabs from the panel 44, so that the bracket tabs are each positioned in a plane which is at an angle to the plane of the panel 44. In some instances, therefore, the bracket tabs 70, 72, 74 and 76 may be the angled tabs, and in other instances the cam tabs 50, 52, 54 and 56 may themselves be the angled tabs. In other instances it may be desirable for both sets of tabs to be at an angle so as to increase the camming action.

The annular cam bracket 68 has an arm 82 that extends outwardly therefrom and is provided with an opening 84 in its outer end. A threaded mounting screw 86 is positioned so as to extend through the opening 84 and the opening 62 of the panel 44, and is then threadedly secured to the nut 64. The screw 86 therefore holds the bracket 68 and the power head 10 in secure relation against rotational movement of the power head relative to the panel while the booster is installed for normal use.

In order to mount the booster assembly 10 to the panel 44, it is merely necessary to axially align the push rod 16 with the panel opening 46 and to align the bracket tabs 70, 72, 74 and 76 with spaces between the cam tabs 50, 52, 54 and 56. As will be evident from Figure 3, this should place the bracket arm 82 at an upwardly and leftwardly extending angle. The entire booster assembly is then turned arcuately clockwise as viewed in Figure 3 so that the tabs 50, 52, 54 and 56 and the tabs 70, 72, 74 and 76 co-operate in camming relation to tightly secure the power head 10 to the panel 44, namely with the two sets of tabs positioned as best seen in Figures 3 and 4. The opening 84 of the bracket arm 82 is then in alignment with the opening 62 of the panel 44, so allowing the screw 86 to be threaded into the nut 64 and tightened to hold the bracket arm 82 in position, for preventing any further rotational movement of the bracket 68 and power head 10 in either direction.

If the attachment arrangement for attaching the push rod 16 to the brake pedal arm 18 includes the pin arrangement of Figure 1, the push rod 16 is pivoted laterally so that the push rod eye 24 fits over the pin 22, and the clip 26 is installed. If on the other hand the attachment arrangement is that shown in Figure 2, the brake pedal arm socket 30 is merely positioned over the head of the push rod 16 and the brake pedal arm 18 is depressed, to snap-fit the push rod head 38 and the snap ring 42 into the socket 32 for retention of the push rod 16 to the brake pedal arm 18.

**Claims**

1. An arrangement mounting a vacuum power head to a fixed panel from one side of the panel, characterised in that:
a panel (44) has a planar panel section with a first opening (46) therethrough;
an annular cam plate (48) is secured to one side of the planar panel section about the first opening (46) and has at least three circumferentially spaced cam tabs (50,52,54,56) extending radially inwardly and in axially spaced relation to the planar panel section, each of the cam tabs (50,52,54,56) having an arcuately oriented leading edge (58) and trailing edge (60);
a vacuum power head (12) has an axially and radially extending housing section (66) and a push rod (16) extending outwardly therefrom, the push rod (16) being adapted to be axially moved to control the power head (l2);

a control arm (l8) is mounted on the opposite side of the panel (44) from the cam plate (48) and has means (22,26; 30,42) connecting the push rod (l6) thereto in axial force-transmitting relation for controlling movements of the push rod (l6) and therefore controlling the power head (l2);

an annular cam bracket (68) is secured to the power head housing section (66) about the push rod (l6), the cam bracket (68) having at least three circumferentially spaced bracket tabs (70,72,74,76) extending radially outwardly and in axially spaced relation to the power head housing section (66), each of the bracket tabs (70,72,74,76) having an arcuately oriented leading edge (78) and trailing edge (80);

the leading edges (58;72) of at least one set of the said at least three circumferentially spaced tabs ((50,52,54,56; 70,72,74,76) are spaced axially further away from the planar panel section (44) than the trailing edges thereof so that each of the said at least one set of tabs is positioned in a plane which is at an angle to the plane of the planar panel section (44);

the bracket tabs (70,72,74,76) are circumferentially spaced in cam-engaging relation with the cam tabs (50,52,54,56) and co-operate therewith by arcuate rotation of the power head (l2) about the axis thereof to secure the power head (l2) to the panel (44) with the leading edges (58;72) of one set of the tabs (50,52,54,56; 70,72,74,76) engaging the other set of tabs in cammed relation adjacent the said other set of tab trailing edges (58;72), the power head (l2) being arcuately rotatable to disengage the bracket tabs (70,72,74,76) from the cam tabs (50,52,54,56) and remove the power head (l2) from the panel (44);

the annular cam bracket (68) has an arm (82) extending outwardly therefrom, and the arm (82) and the panel (44) have means (86) removably but lockingly securing the arm (82) and therefore the annular cam bracket (68) to the panel (44) to hold the cam bracket (68) and the power head (l2) in secure relation against rotatational movement while the power head (l2) is secured to the panel (44) as aforesaid.

2. A mounting arrangement according to claim l, characterised in that the leading edge (58) of each of the cam tabs (50,52,54,56) is spaced axially further away from the planar panel section than the trailing edge (60) so that each of the cam tabs (50,52,54,56) is positioned in a plane which is at an angle to the plane of the planar panel section, and each of the bracket tabs (70,72,74,76) is circumferentially spaced in cam-engaging relation with the respective one of the cam tabs (50,52,54,56) and co-operates therewith to secure the power head (l2) to the panel (4) with the leading edges (58) of the cam tabs (50,52,54,56) engaging the bracket tabs (70,72,74,76) in cammed relation adjacent the trailing edges (80) of the bracket tabs (70,72,74,76).

3. An arrangement according to claim 2, characterised in that the bracket tabs (70,72,74,76) co-operate with the cam tabs (50,52,54,56) by arcuate rotation of the power head (l2) about its axis, and the control arm (l8) has push rod-receiving means (22) thereon into which the push rod (l6) is inserted and secured after the power head (l2) has been secured to the panel (44), the push rod-receiving means (22) co-operating with the push rod (l6) to transmit axial forces to the push rod (l6) from the control arm (l8) after the said insertion has been effected from the side of the panel (44) on which the power head (l2) is mounted.

4. A mounting arrangement according to any one of claims l to 3, characterised in that the panel (44) also has a second opening (62) having internally threaded means (64) adapted to receive a threaded mounting screw (86) therethrough, and the annular cam bracket (68) is provided with an opening (84) in the outer end thereof and has a threaded mounting screw (68) extending therethrough and threadedly secured to the internally threaded means (64).

Fig. 1

Fig. 2

Fig. 3

Fig. 4